# EUROPÄISCHE PATENTSCHRIFT

(11) **EP 2 143 488 B1**
(45) Veröffentlichungstag und Bekanntmachung des Hinweises auf die Patenterteilung: **18.02.2015**
(21) Anmeldenummer: 09006657.2
(22) Anmeldetag: 18.05.2009
(51) Int. Cl.: B01J 23/10, B01J 23/26, B01J 23/63, B01J 23/652, B01J 21/06, B01J 37/02, C01B 3/26, B01D 53/94, B01J 23/00

(54) **Oxidationskatalysator**
Oxidation catalyst
Catalyseur d'oxydation

(30) Priorität: 09.07.2008 DE 102008032200
(43) Veröffentlichungstag der Anmeldung: 13.01.2010
(73) Patentinhaber: Heraeus Precious Metals GmbH & Co. KG, 63450 Hanau (DE)
(72) Erfinder: Endruschat, Uwe, Dr., 60487 Frankfurt (DE); Wille, Ansgar, Dr., 63454 Hanau-Mittelbuchen (DE); Rajagopalan, Prasanna, Dr., 18057 Rostock (DE)
(74) Vertreter: Kühn, Hans-Christian

(56) Entgegenhaltungen:
- WO-A-01/70631
- WO-A-03/051493
- DE-A1- 10 342 162
- US-A1- 2002 009 406
- DULAMITA N ET AL: "Ethylbenzene dehydrogenation on Fe2O3-Cr2O3-K2CO3 catalysts promoted with transitional metal oxides" APPLIED CATALYSIS A: GENERAL, ELSEVIER SCIENCE, AMSTERDAM, NL, Bd. 287, Nr. 1, 15. Juni 2005 (2005-06-15), Seiten 9-18, XP004913896 ISSN: 0926-860X

## Beschreibung

Die vorliegende Erfindung betrifft Katalysatoren zur Oxidation von Abgaskomponenten bei Temperaturen zwischen 200 und 1000°C, die bevorzugt Kohlenwasserstoffe vor Kohlenmonoxid oxidieren.

Edelmetall-Katalysatoren mit 0,1 bis 5 Gew.-% Edelmetall, bezogen auf die oxidische Trägermasse, zeigen eine gute bis sehr gute Oxidationswirkung bei Temperaturen ab 200°C, insbesondere ab 300°C. Die Beständigkeit solcher Systeme gegenüber hohen Temperaturen, insbesondere über 850°C, wird durch höhere Edelmetallbeladungen verbessert.

Mischoxid-Katalysatoren, die völlig auf Edelmetallzusätze verzichten, können bei niedrigen Raumgeschwindigkeiten eine hinreichende Oxidationsaktivität aufweisen. Im Allgemeinen liegen die Ansprechtemperaturen für die katalytische Wirksamkeit zum Teil deutlich über denen von Edelmetall-Katalysatoren. Die Beständigkeit gegenüber hohen Temperaturen ist im Allgemeinen schlechter als bei Edelmetall-Katalysatoren. Zusätzlich reagieren Nichtedelmetall-Katalysatoren eher selektiv mit Kohlenmonoxid und sind für die Verbrennung von Kohlenwasserstoffen weniger geeignet.

In Dulamita N et al.: Ethylbenzene dehydrogenation on Fe2O3-Cr2O3-K2CO3 catalysts promoted with transitional metal oxides", applied catalysis a: General, Elsevier Science, Amsterdam, Bd. 287, Nr. 1, 15.06.2005, Seiten 9-18, XP 004913896, ISSN: 0926-860X, werden Oxidmischungen beschrieben, die sich als Katalysatoren für die Dehydrierung von Kohlenwasserstoffen eignen. Echte Mischoxide werden dort nicht erwähnt.

DE10342162A1 beschreibt Mischoxidmaterial für die Anwendung in methanbetriebenen Brennstoffzellen. Das Problem einer selektiven Oxidation gegenüber CO stellt sich dort nicht.

US20020009406 betrifft Katalysatoren für die Synthesegaserzeugung (CO/H₂) mit einer Titanmatrix.

In WO0170631 werden poröse Mischoxide, bei denen die Metalloxide gleichmäßig in einer Titanoxid-Matrix verteilt sind, als ausgezeichnete Oxidationskatalysatoren für Kohlenwasserstoffe empfohlen. Allerdings bezieht sich dies jeweils auf die selektive Oxidation zu Produkten, die einer Teiloxidation entsprechen.

WO0351493 bezieht sich auf die CO-Oxidation mit geträgerten Katalysatoren auf Basis von Cu oder CuOxid. Es werden dort keine echten Mischoxide vorgestellt.

Die Aufgabe der vorliegenden Erfindung besteht darin, einen Katalysator bereitzustellen, der entweder keinen oder nur einen geringen Edelmetallgehalt aufweist, bei hohen Temperaturen beständig ist und Kohlenwasserstoffe selektiv oxidiert.

Zur Lösung der erfindungsgemäßen Aufgabe werden Mischoxide auf Basis der Oxide der Elemente von Cer, Titan und Chrom bereitgestellt, insbesondere auf einem keramischen Trägermaterial. Vorzugsweise werden die Mischoxide auf dem keramischen Träger, insbesondere Aluminiumoxid, ausgefällt. In erfinderischer Weiterbildung erfolgt eine nachträgliche Zugabe eines Edelmetalls, insbesondere Palladium, in einer Menge von unter 0,05 Gew.-%, insbesondere unter 0,02 Gew.-%. Erfindungsgemäß können bei einer Dotierung mit Palladium katalytische Ergebnisse erzielt werden, wie sie im Stand der Technik nur mit Edelmetallbeladungen von 1 bis 5 Gew.% erreichbar sind.

Die Lösung der erfindungsgemäßen Aufgabe erfolgt mit den Merkmalen der unabhängigen Ansprüche. Die abhängigen Ansprüche beschreiben bevorzugte Ausführungen.

Erfindungsgemäß erfolgt die Oxidation der Kohlenwasserstoffe bei Temperaturen über 400°C, insbesondere über 500°C, mit einem Mischoxid der Elemente Cer, Titan und Chrom. Dieses katalytische Mischoxid kann einfach auf einem Träger befestigt werden, beispielsweise den üblichen metallischen Waben (Honeycomb). Vorzugsweise wird das Mischoxid auf einem keramischen Träger wie Aluminiumoxid befestigt und dieser Verbund aus dem Mischoxid und dem keramischen Trägermaterial als Washcoat auf einem üblichen Träger, wie z. B. metallischen Waben, befestigt.

Vorzugsweise ist Titanoxid die Hauptkomponente des Mischoxid-Katalysators, insbesondere mit 40 bis 60 Gew.%. Jede der drei Metalloxid-Komponenten des Mischoxid-Katalysators weist mindestens 10, insbesondere 15 Gew.-% auf, wobei der Gehalt von Cer vorzugsweise zwischen 10 bis 30, insbesondere 15 bis 25 Gew.-% beträgt und der Anteil an Chromoxid vorzugsweise zwischen 20 und 40 Gew.-%, insbesondere 25 bis 35 Gew.-% beträgt. Besonders bewährt hat sich ein Verhältnis von Ce zu Ti zu Cr von 2 - 5 - 3 mit einer Toleranz von 20 %, insbesondere von 10 %.

Das Mischoxid aus Ceroxid, Titanoxid und Chromoxid verträgt weitere Metalloxide, deren Metall ausgewählt ist aus der Gruppe bestehend aus Mg, Ca, Sr, Ba, Al, Ga, In, Sn, Übergangselemente bis einschließlich Ordnungszahl 79 mit Ausnahme von Tc und Cd, Lanthanide außer Pm. Die allgemeine Formel für das Mischoxid lautet:
Ce_{0,1-0,5}Ti_{0,2-0,8}Cr_{0,1-0,5}Me_{0,0-0,2}Oₓ, insbesondere Ce_{0,2-0,5}Ti_{0,3-0,7}Cr_{0,2-0,5}Me_{0,0-0,1}O_{x.}

Dieser Nichtedelmetall-Katalysator eignet sich zur selektiven Oxidation von Kohlenwasserstoff in Abgasen mit Temperaturen zwischen 300°C und 1000°C zur bevorzugten Oxidation von Kohlenwasserstoffen gegenüber Kohlenmonoxid. Bei Gebrauchstemperaturen von über 700°C, insbesondere über 850°C ist die Temperaturbeständigkeit besser als bei vielen Edelmetallkatalysatoren.

Erfindungsgemäß ist der Katalysator zur selektiven Oxidation von Kohlenwasserstoff gegenüber Kohlenmonoxid ein Mischoxid auf Basis von CeO₂, TiO₂ und Cr₂O₃. Dies ermöglicht eine Abgasreinigung mittels eines Mischoxids als Katalysator, bei der oxidierbare Abgaskomponenten oxidiert werden. Insbesondere werden Kohlenwasserstoffe gegenüber Kohlenmonoxid bevorzugt oxidiert. Grundsätzlich eignet sich der Oxidationskatalysator auf Basis des CeTiCr-Mischoxids für alle Prozesse, in denen eine Totaloxidation gefordert ist, wie z. B. die Reinigung industrieller Abgase oder die Anwendung als Diesel-Oxidationskatalysator. Die Katalysator-Formulierung auf Basis eines CeTiCr-Mischoxids ist besonders für den Einsatz in Kleinmotoren-Anwendungen zur Verringerung deren HC-Emissionen geeignet.

Um die Mindesttemperatur für die katalytische Wirkung zu erniedrigen, insbesondere auf Temperaturen unter 400°C, wird der Mischoxid-Katalysator zusätzlich mit Edelmetall, insbesondere Palladium oder Silber, dotiert. Der Edelmetallanteil wird im Vergleich zu bisherigen PURh Katalysatoren für den Temperaturbereich unter 400°C bei gleicher Wirksamkeit drastisch verringert. Dabei sind Pt und Rh durch andere Edelmetalle ersetzbar, insbesondere Ag, Pd und Ir. Insbesondere ist dabei der Einsatz an Edelmetall im Vergleich zum Stand der Technik um mindestens eine Größenordnung reduziert. Während bekannte EdelmetallKatalysatoren 1 bis 5 Gew.-% Edelmetall bezogen auf das Trägermaterial aufweisen, insbesondere die teuren Edelmetalle Pt und Rh, reichen erfindungsgemäß weniger als 0,5 Gew.-%, insbesondere weniger als 0,2 Gew.-% Edelmetall, da erfindungsgemäß bereits 0,005 Gew.-% Edelmetall ausreichen, um mit herkömmlichen Edelmetall basierenden Katalysatoren erzielbare Ergebnisse zu erreichen. Dabei reichen erfindungsgemäß auch weniger als 0,5, insbesondere weniger als 0,2 Gew.-%, der billigen Edelmetalle Au, Ru, Ir und insbesondere Pd und Ag. zB 0,001 Gew.%, Pd

Erfindungsgemäß werden mit wesentlich geringerem Edelmetall-Einsatz im Vergleich zu Edelmetall-Katalysatoren vergleichbare katalytische Aktivitäten erzielt und eine bessere Beständigkeit gegenüber hohen Temperaturen erreicht. Weiterhin wird erstmals ein Mischoxid-Katalysator mit einer hohen Selektivität gegenüber Kohlenwasserstoffen bereitgestellt. Insbesondere wird dem Mischoxid Edelmetall zudotiert, wenn die katalytische Wirkung bereits bei 200 bis 300 °C erfolgen soll.

Erfindungsgemäß wird weiterhin eine besonders einfache Herstellung ermöglicht. Zur Herstellung eines Oxidationskatalysators für Verbrennungskraftmaschinen wird ein Mischoxid aus Cer(IV)oxid, Titan(IV)oxid, und Chrom(III)oxid auf einem Formkörper oder einer Oxidkeramik befestigt. Hierzu hat es sich bewährt, den Formkörper mit einer wässrigen Lösung des Mischoxids zu imprägnieren und den mit dem Mischoxid imprägnierten Formkörper zu trocknen. Es hat sich ebenfalls bewährt, das Mischoxid auf dem Formkörper auszufällen. Der Formkörper besteht aus hochtemperaturstabilen Material, insbesondere Metall oder Oxid oder Karbid. Vorzugsweise ist der Formkörper eine Wabenstruktur (Honeycomb) oder ein Drahtgeflecht. Besonders bevorzugt ist das Mischoxid auf einer Oxidkeramik befestigt, wobei die Oxidkeramik auf einem Formkörper befestigt wird. Derartige Oxidkeramiken werden auch als Washcoat bezeichnet. Gegebenenfalls weist das Mischoxid weitere Metalloxide auf, deren Metall ausgewählt ist aus der Gruppe bestehend aus Mg, Ca, Sr, Ba, Al, Ga, In, Sn, Übergangselemente bis einschließlich Ordnungszahl 79 mit Ausnahme von Tc und Cd, Lanthanide außer Pm. Insbesondere sind CeO₂, TiO₂ und Cr₂O₃ die Hauptkomponenten des Mischoxids und die weiteren Metalloxide Nebenkomponenten oder Dotierungen.

Das Mischoxid eignet sich als Oxidationskatalysator in Verbrennungsräumen, insbesondere Verbrennungsmotoren zur vollständigen Verbrennung des Brennstoffs. In Abgasrohren oder Abgasrückführrohren werden mittels des Oxidationskatalysators Kohlenwasserstoffe oxidiert. Erfindungsgemäß wird auch eine Vorrichtung bereitgestellt, umfassend einen Verbrennungsraum und ein daran angeschlossenes Abgasrohr oder Abgasrückführrohr, wobei innerhalb der Vorrichtung das Mischoxid auf Basis von Ceroxid, Titanoxid und Chromoxid als Oxidationskatalysator befestigt ist.

Insbesondere betragen in dieser Vorrichtung die atomaren Anteile der Metalle
0,1 bis 0,5 Ce, vorzugsweise 0,2 bis 0,5
0,2 bis 0,8 Ti, vorzugsweise 0,3 bis 0,7
0,1-0,5 Cr, vorzugsweise 0,2 bis 0,5
wobei das Mischoxid gegebenenfalls weiteres Metalloxid aufweist, dessen Metall ausgewählt ist aus der Gruppe bestehend aus Mg, Ca, Sr, Ba, Al, Ga, In, Sn, Übergangselemente bis einschließlich Ordnungszahl 79 mit Ausnahme von Tc und Cd, Lanthanide außer Pm, wobei die atomaren Anteile der weiteren Metalle insgesamt 0 bis 0,2 betragen vorzugsweise 0 bis 0,1.

Die Wahl des keramischen Trägers hat sowohl einen Einfluss auf die Aktivität, auf die Temperaturstabilität als auch auf die Beschichtbarkeit des Oxidationskatalysators auf metallische, keramische oder karbidische Formkörper.

Durch die Verwendung eines katalytisch inerten Al₂O₃ werden insbesondere die Beschichtbarkeit und die thermische Stabilität verbessert. In diesem Falle ermöglicht die basische Oberfläche des Al₂O₃ eine verbesserte Anbindung an die oxidischen Oberflächen von Formkörpern und bietet für das Mischoxid ein temperaturstabiles Traggerüst.

Durch die Verwendung eines katalytisch aktiven Trägers wie CeO₂ wird insbesondere die Oxidationsaktivität verbessert.

Durch die Verwendung eines katalytisch inerten Trägers wie Al₂O₃ und eines katalytisch aktiven Trägers wie CeO₂ können sowohl Beschichtbarkeit, Haftungsverhalten und Temperaturstabilität als auch die Oxidationsfähigkeit gesteigert werden.

Die Befestigung des Mischoxidkatalysators auf einen keramischen Träger erfolgt in einem Verhältnis von Mischoxid zu Träger von 5:1 bis 1:3, bevorzugt in einem Verhältnis von 3:1 bis 1:1. Insbesondere ein Verhältnis von 7:3 bis 6:4 hat sich als besonders aktiv herausgestellt.

Ebenso kann zur Unterstützung der Oxidationsaktivität von Edelmetallkatalysatoren das Mischoxid in physikalischen Mischungen zusammen mit Edelmetallkatalysatoren angewendet werden, um somit die Anwendung von Edelmetall zu verringern.

Ein diesbezüglicher Nichtedelmetall-Katalysator zur selektiven Oxidation von Kohlenwasserstoff ist bei Kleinmotoren-Abgasen mit Temperaturen über 850°C besonders geeignet zur bevorzugten Oxidation von Kohlenwasserstoffen gegenüber Kohlenmonoxid. Mit lediglich 0,01 bis 0,05 Gew.-% zu dem Mischoxid dotiertem Edelmetall, insbesondere Pd wird ein schon unterhalb 300°C aktiver Oxidationskatalysator bereitgestellt.

Die Verwendung eines Mischoxids auf Basis von Ceroxid, Titanoxid und Chromoxid als Oxidationskatalysator innerhalb eines Verbrennungsraums oder eines Abgasrohrs oder Abgasrückführrohrs spart das bisher verwendete Edelmetall, insbesondere wenn die atomaren Anteile der Metalle
0,1 bis 0,5 Ce, vorzugsweise 0,2 bis 0,4
0,2 bis 0,8 Ti, vorzugsweise 0,3 bis 0,7
0,1 bis 0,5 Cr, vorzugsweise 0,2 bis 0,4
betragen, wobei das Mischoxid gegebenenfalls weiteres Metalloxid aufweist, dessen Metall ausgewählt ist aus der Gruppe bestehend aus Mg, Ca, Sr, Ba, Al, Ga, In, Sn, Übergangselemente bis einschließlich Ordnungszahl 79 mit Ausnahme von Tc und Cd, Lanthanide außer Pm, wobei die atomaren Anteile der weiteren Metalle insgesamt 0 bis 0,2 betragen.

Im Folgenden wird die Erfindung anhand von Beispielen mit Bezug auf die Abbildungen verdeutlicht:
- Figur 1: zeigt die Konvertierung von Kohlenwasserstoffen und Kohlenmonoxid in Anwesenheit eines erfindungsgemäßen Mischoxid-Katalysators;
- Figur 2: zeigt die temperaturabhängigen Konvertierungsraten von Kohlenwasserstoffen und Kohlenmonoxid auf einer Oxidkeramik befestigten Mischoxids;
- Figur 3: offenbart die Konvertierungsrate von Kohlenwasserstoffen und Kohlenmono xid eines mit Palladium dotierten Mischoxid-Katalysators.

Es wird jeweils eine Abgaszusammensetzung aus 6 Vol.-% CO, 8,7 Vol.-% CO₂, 4,5 Vol.-% O₂, 1,1 Vol.-% und Rest N₂ bei einer Raumgeschwindigkeit von 100 000 /h mit den in den Beispielen 1 bis 3 beschriebenen Katalysatoren behandelt.

### Beispiel 1:

### Ce-Ti-Cr-Oxid im Verhältnis 20-50-30

230,9 g Cr(III)-Nitrat werden in 300 ml VEW gelöst (pH=0,94). 102,4 g Ce-Nitratlösung (19,5 % Ce) und 521,6 g Titanoxidsulfat-Lösung werden abgewogen, die Titanoxidsulfat-Lösung wird zur Cr-Nitratlösung gegeben. Anschließend wird die Ce-Nitratlösung hinzugefügt. 600 ml 12,5% NH3-Lösung werden in einem Gefäß vorgelegt und die Ce-Ti-Cr-Lösung wird langsam in die NH3-Lösung zugetropft. Während der Zugabe wird der pH-Wert bei >7 mit zusätzlicher NH3-Lösung gehalten. Das ausgefallene CeTiCr-Oxid wird filtriert und sulfatfrei gewaschen. Das erhaltene Pulver wird bei 110°C getrocknet und 4 Stunden bei 500°C getempert. Im Anschluss wird das Pulver zu einer beschichtungsfähigen Washcoat-Slurry gemahlen. Zur Testung der katalytischen Aktivität werden Metallwaben mit 200 g/l Beschichtungsmenge beschichtet und in einer Synthesegasanlage getestet.

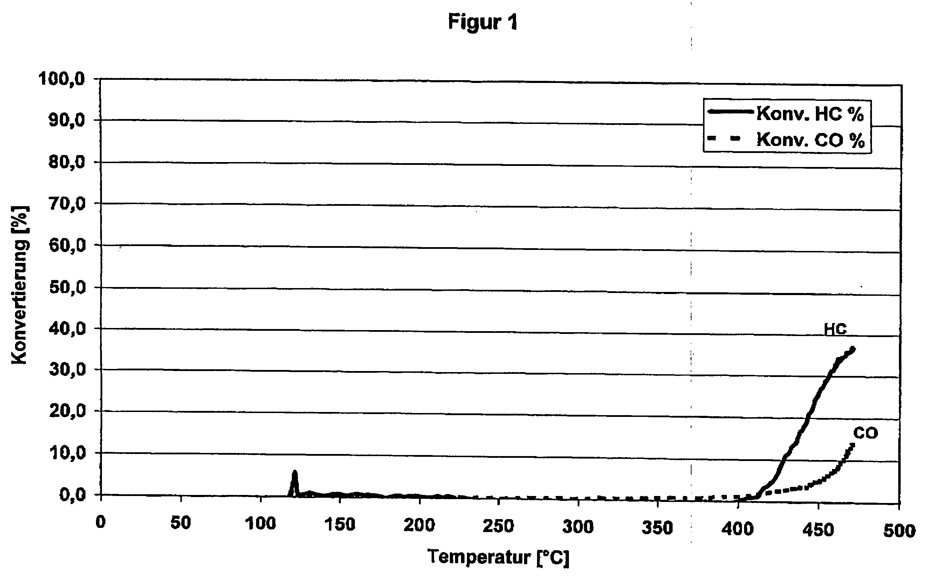

Die temperaturabhängigen Konvertierungsraten von Kohlenwasserstoffen und Kohlenmonoxid sind in Figur 1 wiedergegeben.

### Beispiel 2:

### Al₂O₃-Ce-Ti-Cr-Oxid im Verhältnis 40 % Al₂O₃ und 60 % CeTiCr-Oxid im Verhältnis 20-50-30

Entsprechend Beispiel 1 wird ein Fällungsreagenz aus Ce-Nitratlösung, Titanoxidsulfat-Lösung und Cr(III)-Nitratlösung hergestellt. Ein kommerzielles gamma-Al₂O₃ wird in Wasser suspendiert und mit NH₃-Lösung auf pH 8 bis 9 eingestellt. Die Ce-Ti-Cr-Lösung wird nun unter pH-Wertkontrolle (>7) langsam zugetropft. Das auf das Al₂O₃ ausgefällte Ce-Ti-Cr-Oxid wird filtriert, sulfatfrei gewaschen, getrocknet und getempert. Im Anschluss wird das Pulver zu einer beschichtungsfähigen Washcoat-Slurry gemahlen. Zur Testung der katalytischen Aktivität werden Metallwaben mit 200 g/l Beschichtungsmenge beschichtet und in einer Synthesegasanlage getestet.

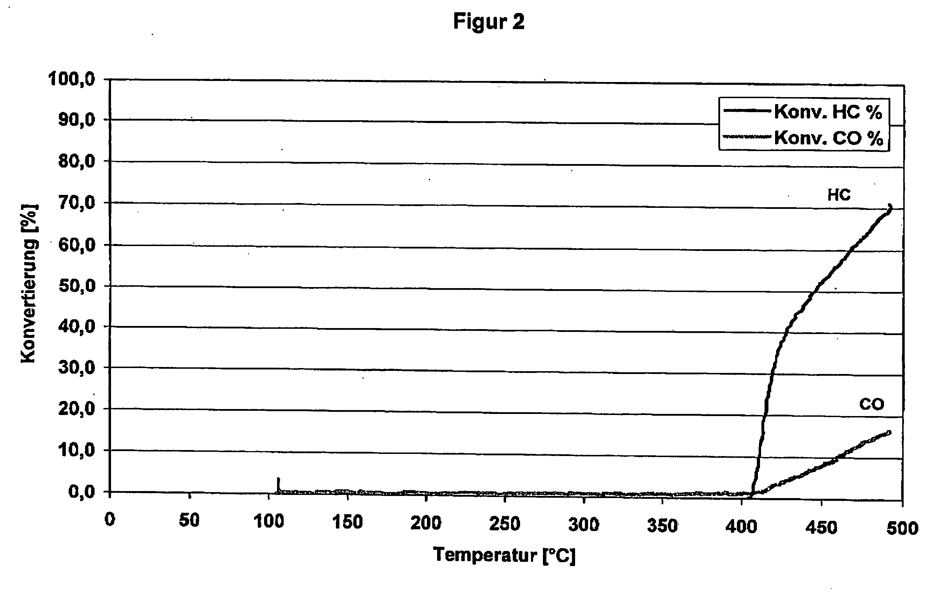

Die temperaturabhängigen Konvertierungsraten von Kohlenwasserstoffen und Kohlenmonoxid sind in Figur 2 wiedergegeben.

### Beispiel 3:

### 0,018 g/l Pd-Al₂O₃-Ce-Ti-Cr-Oxid im Verhältnis 40 % Al₂O₃ und 60 % CeTiCr 20-50-30 -Oxid

Entsprechend Beispiel 1 wird ein Fällungsreagenz aus Ce-Nitratlösung, Titanoxidsulfat-Lösung und Cr(III)-Nitratlösung hergestellt. Ein kommerzielles gamma-Al₂O₃ wird in Wasser suspendiert und mit NH₃-Lösung auf pH 8 bis 9 eingestellt. Die Ce-Ti-Cr-Lösung wird nun unter pH-Wertkontrolle (>7) langsam zugetropft. Das auf das Al₂O₃ ausgefällte Ce-Ti-Cr-Oxid wird filtriert, sulfatfrei gewaschen, getrocknet und getempert. Im Anschluss wird das Pulver zu einer beschichtungsfähigen Washcoat-Slurry gemahlen. Bei einem pH-Wert von 4 wird entsprechend des Feststoffgehaltes der Washcoat-Suspension eine Pd-Nitratlösung hinzugetropft, so dass eine Edelmetallbeladung von 0,098 g/l (0,5 *g*/*ft³*) Pd entsteht. Zur Testung der katalytischen Aktivität werden Metallwaben mit 200 g/1 Beschichtungsmenge beschichtet und in einer Synthesegasanlage getestet.

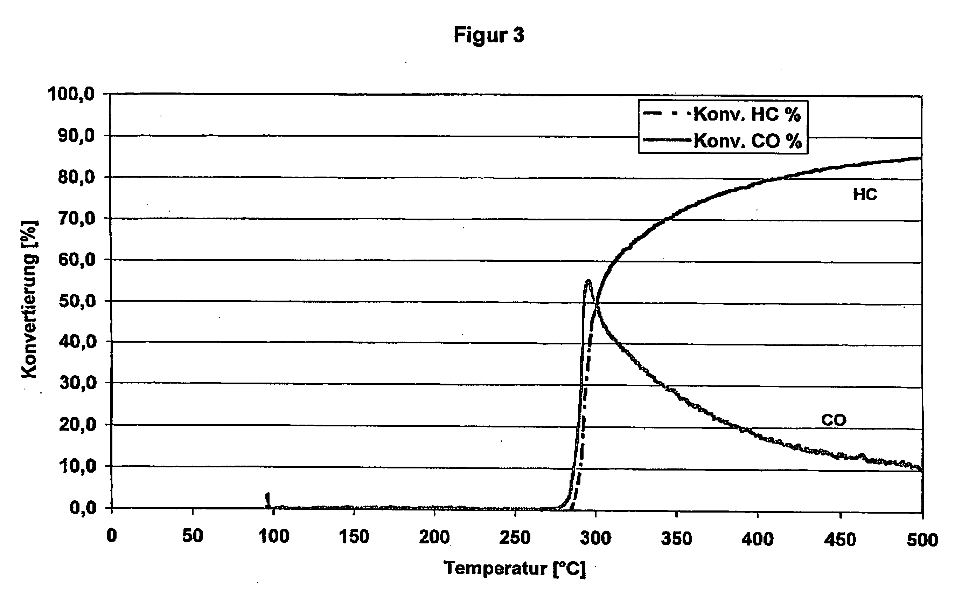

Die temperaturabhängigen Konvertierungsraten von Kohlenwasserstoffen und Kohlenmonoxid sind In Figur 3 wiedergegeben.

Weitere Verhältnisse wurden anhand der Herstellung von verschiedenen Mischoxidpulvern durchgeführt, die in einem Rohrreaktor anschließend als getrocknetes und kalziniertes Pulver in einem CO, Propan und 02 enthaltenen Abgas (5,5 Vol.-% CO, 8 Vol.-% CO₂, 5 Vol.-% . O₂, 1 Vol.-% Propan und Rest N₂ getestet wurden. Die Ergebnisse hierzu sind in Tabelle 1 zu finden. Die Konvertierung in Prozent bezüglich Kohlenwasserstoffe und CO bezieht sich auf eine Temperatur von 350°C bei einer Raumgeschwindigkeit von 150 000 /h.

Die Herstellung eines Mischoxids mit einem Verhältnis von Ce 60 - Ti 20 - Cr 20 führt zu vergleichbaren Ergebnissen hinsichtlich Aktivität bezüglich Kohlenwasserstoffoxidation sowie Selektivität hinsichtlich HC-Konvertierung gegenüber CO-Konvertierung wie für ein Mischoxid im Verhältnis Ce 70 - Ti 20 - Cr 10. Im Vergleich dieser Pulver sticht die schon zuvor beschriebene Formulierung mit Ce 20 - Ti 50 - Cr 30 durch eine besonders hohe Oxidationsaktivität für Kohlenwasserstoffe hervor.

Ein Mischoxid auf Basis CeTi zeigt dagegen keine Kohlenwasserstoffoxidation. Ein Mischoxid auf Basis CeCr zeigt eine mäßige Kohlenwasserstoffoxidationsaktivität bei einer schlechten Selektivität hinsichtlich Kohlenwasserstoffoxidation. Ein Mischoxid auf Basis TiCr zeigt zwar eine gute Selektivität, jedoch ist die Grundaktivität bezüglich Kohlenwasserstoffoxidation deutlich verringert gegenüber eine CeTiCr-Formulierung. Verwendet man die einzelnen Bestandteile Ce, Ti und Cr jeweils getrennt als Oxidationskatalysator, so zeigt nur Ce eine Oxidationsaktivität allerdings auf niederem Niveau und gleichwertig für Kohlenwasserstoffe und für CO. Ti ist sehr geringfügig gegenüber CO-Oxidation aktiv, und Cr nur geringfügig gegenüber Kohlenwasserstoffoxidation aktiv.

**Tabelle 1**

| | **Ce** | **Ti** | **Cr** | **HC.Konv.** | **CO-Konv.** |
|---|---|---|---|---|---|
| Bsp. 4 | 60 | 20 | 20 | 55 | 17 |
| Bsp. 5 | 70 | 20 | 10 | 48 | 17 |
| Bsp. 6 | 20 | 50 | 30 | 75 | 18 |
| Vgl. 1 | 29 | 71 | 0 | 0 | 5 |
| Vgl. 2 | 40 | 0 | 60 | 32 | 20 |
| Vgl. 3 | 0 | 63 | 37 | 32 | 2 |
| Vgl. 4 | 100 | 0 | 0 | 22 | 22 |
| Vgl. 5 | 0 | 100 | 0 | 0 | 8 |
| Vgl. 6 | 0 | 0 | 100 | 8 | 0 |

## Patentansprüche

1. Verfahren zur Abgasreinigung, **dadurch gekennzeichnet, dass** mittels eines Mischoxids auf Basis der Metalle Cer, Titan und Chrom als Katalysator eine selektive Oxidation von Kohlenwasserstoff gegenüber Kohlenmonoxid durchgeführt wird,
und die Abgasreinigung innerhalb eines Prozesses erfolgt, in dem eine Totaloxidation gefordert ist.

2. Verfahren nach Anspruch 1, wobei der Prozess
in der Reinigung industrieller Abgase oder
in der Anwendung als Diesel-Oxidationskatalysator innerhalb eines Verbrennungsraums oder eines daran angeschlossenen_Abgasrohrs oder Abgasrückführrohrs besteht.

3. Verfahren nach Anspruch 1 oder 2, **dadurch gekennzeichnet, dass** das Mischoxid als Beschichtung auf einem Formkörper befestigt ist.

4. Verfahren nach einem der vorstehenden Ansprüche, **dadurch gekennzeichnet, dass** dem Mischoxid weniger als 0,5 Gew.-% Edelmetall zudotiert ist.

5. Verfahren gemäß Anspruch 1, **dadurch gekennzeichnet, dass** zur Herstellung des Katalysators ein Mischoxid aus Ceroxid, Titanoxid, Chromoxid und gegebenenfalls weiterer Metalloxide, deren Metall ausgewählt ist aus der Gruppe bestehend aus Mg, Ca, Sr, Ba, Al, Ga, In, Sn, Übergangselemente bis einschließlich Ordnungszahl 79 mit Ausnahme von Tc und Cd, Lanthanide außer Pm, auf einem metallischen oder oxidischen oder karbidischen hochtemperaturstabilen Formkörper oder einer Oxidkeramik befestigt wird, wobei die Oxidkeramik auf einem Formkörper befestigt wird.

6. Verfahren nach Anspruch 5, **dadurch gekennzeichnet, dass** der Formkörper ein Drahtgeflecht oder eine Wabenstruktur (Honeycomb) ist.

7. Verfahren nach einem der Ansprüche 5 oder 6, **dadurch gekennzeichnet, dass** die Oxidkeramik, auf der das Mischoxid befestigt ist, ein Washcoat ist.

8. Vorrichtung zur Durchführung eines Verfahrens gemäß einem der vorstehenden Ansprüche umfassend einen Verbrennungsraum und ein daran angeschlossenes Abgasrohr oder Abgasrückführrohr, **dadurch gekennzeichnet, dass** innerhalb der Vorrichtung ein Mischoxid auf Basis von Ceroxid, Titanoxid und Chromoxid als Oxidationskatalysator befestigt ist.

9. Vorrichtung nach Anspruch 8, **dadurch gekennzeichnet, dass** das molare Verhältnis der Metalle des Mischoxids
0,1 bis 0,5 Ce,
0,2 bis 0,8 Ti,
0,1-0,5 Cr
beträgt, wobei das Mischoxid gegebenenfalls weiteres Metalloxid aufweist, dessen Metall ausgewählt ist aus der Gruppe bestehend aus Mg, Ca, Sr, Ba, Al, Ga, In, Sn, Übergangselemente bis einschließlich Ordnungszahl 79 mit Ausnahme von Tc und Cd, Lanthanide außer Pm, wobei die atomaren Anteile der weiteren Metalle insgesamt 0 bis 0,2 betragen.

10. Vorrichtung nach einem der Ansprüche 8 oder 9, **dadurch gekennzeichnet, dass** dem Mischoxid zwischen 0,001 und 0,1 Gew.-% Pd zudotiert ist.

## Claims

1. A method for waste gas purification, **characterised in that** a selective oxidation of hydrocarbon is carried out in relation to carbon monoxide by means of a mixed oxide based on the metals cerium, titanium and chromium as a catalyst, and the waste gas purification is achieved in a process in which total oxidation is required.

2. The method according to Claim 1, wherein the process consists of
the purification of industrial waste gas or of
the use as a Diesel oxidation catalyst inside a combustion chamber or an exhaust pipe or exhaust return pipe connected thereto.

3. The method according to Claim 1 or 2, **characterised in that** the mixed oxide is attached to a mould as a coating.

4. The method according to any one of the preceding claims, **characterised in that** less than 0.5 per cent by weight of noble metal are doped to the mixed oxide.

5. The method according to Claim 1, **characterised in that**, for the production of the catalyst, a mixed oxide from cerium oxide, titanium oxide, chromium oxide and, where applicable, further metal oxides the metal of which is selected from the group consisting of Mg, Ca, Sr, Ba, Al, Ga, In, Sn, transition elements up to and including atomic number 79 with the exception of Tc and Cd, lanthanides with the exception of Pm, is attached to a metallic or oxidic or carbidic mould having high temperature stability or to oxide ceramics, wherein the oxide ceramics is attached to a mould.

6. The method according to Claim 5, **characterised in that** the mould is a wire mesh or a honeycombed structure.

7. The method according to any one of Claims 5 or 6, **characterised in that** the oxide ceramics to which the mixed oxide is attached is a wash coat.

8. A device for applying a method according to any one of the preceding claims, comprising a combustion chamber and an exhaust pipe or exhaust return pipe connected thereto, **characterised in that** a mixed oxide based on cerium oxide, titanium oxide and chromium oxide is attached as an oxidation catalyst inside the device.

9. The device according to Claim 8, **characterised in that** the molar ratio of the metals of the mixed oxide is
0.1 to 0.5 Ce,
0.2 to 0.8 Ti,
0.1 to 0.5 Cr,
wherein, where applicable, the mixed oxide comprises a further metal oxide the metal of which is selected from the group consisting of Mg, Ca, Sr, Ba, Al, Ga, In, Sn, transition elements up to and including atomic number 79 with the exception of Tc and Cd, lanthanides with the exception of Pm, wherein the atomic contents of the further metals all in all amount to 0 to 0.2.

10. The device according to any one of Claims 8 or 9, **characterised in that** an amount of Pd ranging from 0.001 to 0.1 per cent by weight are doped to the mixed oxide.

## Revendications

1. Procédé d'épuration des émissions gazeuses, **caractérisé en ce qu'**une oxydation sélective d'hydrocarbure vis-à-vis du monoxyde de carbone est effectuée au moyen d'un mélange d'oxydes sur la base des métaux comprenant le cérium, le titane et le chrome en tant que catalyseur et que l'épuration des émissions gazeuses a lieu dans un processus, dans lequel une oxydation totale est exigée.

2. Procédé selon la revendication 1, pour lequel le processus consiste dans l'épuration de gaz d'échappement industriels ou dans l'application en tant que catalyseur d'oxydation diesel à l'intérieur d'une chambre de combustion ou d'un tuyau d'échappement ou d'un tuyau de recyclage des gaz d'échappement qui y est raccordé.

3. Procédé selon la revendication 1 ou 2, **caractérisé en ce que** le mélange d'oxydes est fixé, en tant que revêtement, sur un corps moulé.

4. Procédé selon l'une des revendications précédentes, **caractérisé en ce que** le mélange d'oxydes est dopé avec moins de 0,5 % en poids de métal précieux.

5. Procédé selon la revendication 1, **caractérisé en ce que**, pour la fabrication du catalyseur, un mélange d'oxydes, composé d'oxyde cérique, d'oxyde de titane, d'oxyde de chrome et, le cas échéant, d'autres oxydes métalliques, dont le métal est sélectionné dans le groupe se composant de Mg, Ca, Sr, Ba, Al, Ga, In, Sn, d'éléments de transition jusqu'au numéro atomique 79 compris, à l'exception du Tc et du Cd, de lanthanides en dehors du Pm, est fixé sur un corps moulé métallique ou oxydique ou carburé, stable à haute température ou sur une céramique oxydée, pour lequel la céramique oxydée est fixée sur un corps moulé.

6. Procédé selon la revendication 5, **caractérisé en ce que** le corps moulé est un treillis de fils métalliques ou une structure en nid d'abeilles (alvéolaire).

7. Procédé selon l'une des revendications 5 ou 6, **caractérisé en ce que** la céramique oxydée, sur laquelle le mélange d'oxydes est fixé, est un revêtement.

8. Appareil pour la réalisation d'un procédé selon l'une des revendications précédentes, comprenant une chambre de combustion et un tuyau d'échappement ou un tuyau de recyclage des gaz d'échappement qui y est raccordé, **caractérisé en ce qu'**un mélange d'oxydes sur la base d'oxyde cérique, d'oxyde de titane et d'oxyde de chrome est fixé en tant que catalyseur d'oxydation à l'intérieur de l'appareil.

9. Appareil selon la revendication 8, **caractérisé en ce que** le rapport molaire des métaux du mélange d'oxydes est de
0,1 à 0,5 Ce,
0,2 à 0,8 Ti,
0,1 à 0,5 Cr,
pour lequel le mélange d'oxydes présente, le cas échéant, un autre oxyde métallique, dont le métal est sélectionné dans le groupe se composant de Mg, Ca, Sr, Ba, Al, Ga, In, Sn, d'éléments de transition jusqu'au numéro atomique 79 compris, à l'exception du Tc et du Cd, de lanthanides en dehors du Pm, pour lequel les proportions atomiques des autres métaux vont au total de 0 à 0,2.

10. Appareil selon l'une des revendications 8 ou 9, **caractérisé en ce que** le mélange d'oxydes est dopé avec entre 0,001 et 0,1 % en poids de Pd.
